# EUROPÄISCHE PATENTANMELDUNG

(11) **EP 0 829 498 A1**
(43) Veröffentlichungstag der Anmeldung: **18.03.1998**
(21) Anmeldenummer: 97112242.9
(22) Anmeldetag: 17.07.1997
(51) Int. Cl.: C08G 18/79, C08G 18/75, C08G 18/32

(54) **Uretdiongruppenhaltige Polyadditionsverbindungen, ein Verfahren zu ihrer Herstellung sowie deren Verwendung**

(30) Priorität: 13.09.1996 DE 19637377
(71) Anmelder: HÜLS AKTIENGESELLSCHAFT, 45764 Marl (DE)
(72) Erfinder: Gras, Rainer, Dr., 44879 Bochum (DE); Weiss, Jörn Volker, Dr., 45721 Haltern (DE); Wolf, Elmar, Dr., 45661 Recklinghausen (DE); Schmitt, Felix, Dr., 45701 Herten (DE)

(57) **Zusammenfassung**

Uretdiongruppenhaltige Polyadditionsverbindungen folgender Zusammensetzung: 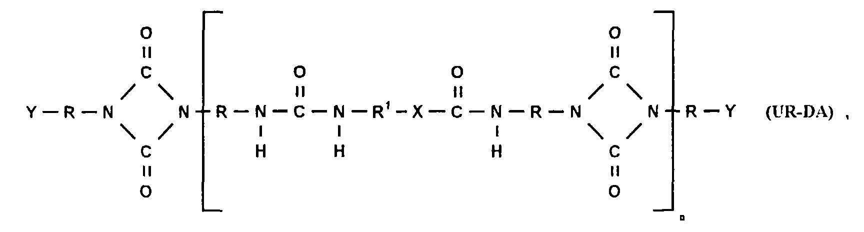 wobei:
- Y:: 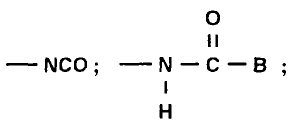
- B:: 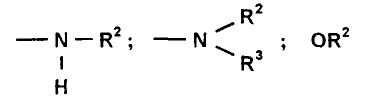
- X:: O ; NH, NR⁴
- R:: 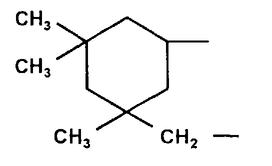
- n:: 1 - 20
- R¹:: R oder lineare, verzweigte oder cyclische Alkylenreste mit 2 - 16 C-Atomen
- R², R³:: gleiche oder verschiedene Kohlenwasserstoffreste mit 1 - 14 C-Atomen
- R⁴:: R² oder eine

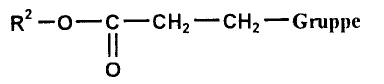

## Beschreibung

Gegenstand der vorliegenden Erfindung sind uretdiongruppenhaltige Polyadditionsverbindungen mit freien, partiell oder ganz blockierten Isocyanatgruppen, ein Verfahren zu ihrer Herstellung sowie die Verwendung in Polyurethan-Pulverlacken mit matter Oberfläche.

Seit geraumer Zeit gibt es ein zunehmendes Interesse an Pulverlacken, die eine malte Oberfläche ergeben. Die Ursache dafür ist überwiegend praktischer Art. Glänzende Flächen erfordern ein weitaus höheres Maß an Reinigung als malte Flächen. Darüber hinaus kann es aus sicherheitstechnischen Gründen wünschenswert sein, stark reflektierende Flächen zu vermeiden.

Das einfachste Prinzip, eine malte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumdioxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar ebenfalls eine Mattierung, aber geringfügige Änderungen während des Extrudierens führen zu Schwankungen im Oberflächenglanz. Die Reproduzierbarkeit des Matteffektes ist nicht gewährleistet.

Überraschenderweise konnten PUR-Pulverlacke mit mattem Aussehen gefunden werden, die nicht mit den aufgeführten Nachteilen behaftet sind, wenn als Harterkomponente Polyadditionsverbindungen des Isophorondiisocyanat-Uretdions (abgekürzt: IPDI-Uretdion) und Diaminen bzw. Aminoalkoholen eingesetzt wurden.

Gegenstand der vorliegenden Erfindung sind somit uretdiongrupperhaltige Polyadditionsverbindungen folgender Zusammensetzung: 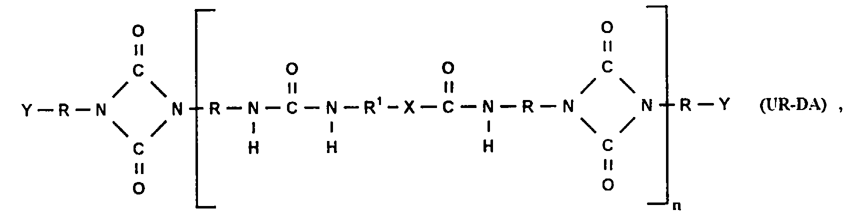 wobei:
- Y:: 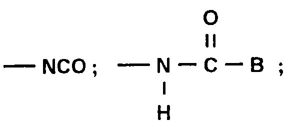
- B:: 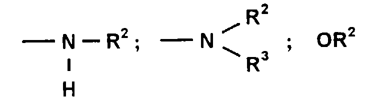
- X:: O ; NH, NR⁴
- R:: 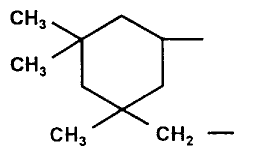
- n:: 1 - 20
- R¹:: R oder lineare, verzweigte oder cyclische Alkylenreste mit 2-16 C-Atomen
- R², R³:: gleiche oder verschiedene Kohlenwasserstoffreste mit 1 - 14 C-Atomen
- R⁴:: R² oder eine 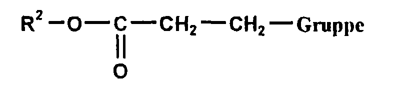 bedeuten.

Die erfindungsgemäßen Verbindungen zeichnen sich durch einen Gehalt an freien NCO-Gruppen von 0,1 - 5 %, vorzugsweise 0,1 - 1 %, einen Gesamt-NCO-Gehalt (freie + latente NCO-Gruppen) von 10 - 18 %, vorzugsweise 12 - 17 %, einen Uretdiongruppengehalt von 1,2 - 2,1 mmol/g, einen Gehalt an blockierten NCO-Gruppen von 0 - 1 mmol/g aus. Ihr Schmelzpunkt variiert in einem Bereich von 120 - 180 °C, vorzugsweise 140 - 170 °C. Sie eignen sich in hervorragender Weise zur Herstellung von PUR-Pulverbeschichtungen.

Ein weiterer Gegenstand der vorliegenden Erfindung ist ein Verfahren zur Herstellung der erfindungsgemäßen Verbindungen entsprechend der folgenden Reaktionsgleichung: 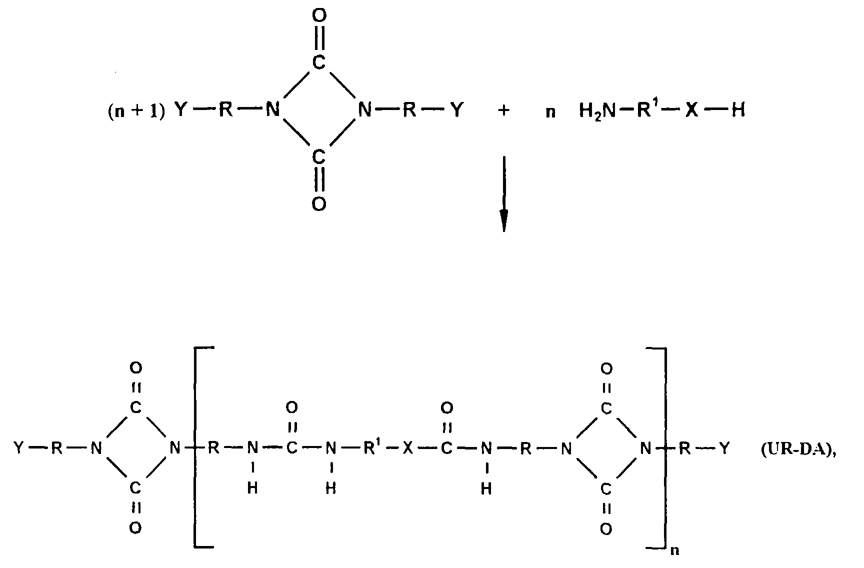 wobei die freien NCO-Gruppen des UR-DA gegebenenfalls ganz oder partiell mit dem Blockierungsmittel umgesetzt sein können und die Substituenten die oben genannte Bedeutung haben.

Bei dem im erfindungsgemäßen Verfahren einzusetzenden Uretdion handelt es sich um das IPDI-Uretdion, wie es in den DE-OSS 30 30 513 und 37 39 549 beschrieben wird, mit einem freien NCO-Gehalt von 17 - 18 %, d. h. daß mehr oder minder hohe Anteile an Polyuretdion des IPDI im Reaktionsprodukt vorliegen müssen. Der Monomergehalt liegt bei ≤ 1 %. Der Gesamt-NCO-Gehalt des IPDI-Uretdions nach dem Erhitzen auf 180 - 200 °C (0,5h) beträgt 37,5 - 37,7 %.

Die für das erfindungsgemäße Verfahren einzusetzenden Diamine sind Diamine mit einer primären und einer sekundären Aminogruppe. Diese Diamine werden in zwei Stufen hergestellt, wobei in der 1. Stufe das diprimäre Diamin mit einem Aldehyd oder Keton zur Schiffschen Base kondensiert wird und in der 2. Stufe die Hydrierung und fraktionierte Destillation der Schiffschen Base erfolgt. Um möglichst wenig Nebenprodukt (Di-Schiffsche Base) zu erhalten, muß mit einem großen Überschuß an Diamin gearbeitet werden; in der Regel werden 10 mol Diamin mit einem Mol Carbonylverbindung umgesetzt. Für die Kondensation zur Schiffschen Base kommen grundsätzlich alle aliphatischen und cycloaliphatischen Diamine. wie z. B. Ethylendiamin, 1.2-Diaminopropan, 2-Methylpentamethylendiamin, Hexamethylendiamin, 2.2.4-(2.4.4)-Trimethylenhexamethylendiamin, Isophorondiamin, 1.2-Diaminocyclohexan sowie 1.3-Bis(aminomethyl)benzol, in Frage. Für die Herstellung der Schiffschen Base einzusetzende Carbonylverbindung kommen grundsätzlich alle (cyclo)aliphatischen Aldehyde und Ketone in Frage; bevorzugt werden jedoch Isobutyraldehyd, 2-Ethylhexanal, Methylisobutylketon, Methylethylketon, Diisobutylketon, Cyclohexanon und 3.5.5-Trimethylcyclohexanon eingesetzt. Eine Variante des erfindungsgemäßen Verfahrens besteht darin. Diamine einzusetzen, wie sie durch Reaktion von diprimären Diaminen mit Acrylsaureestern, wie z. B. Acrylsäuremethyl-, -ethyl-, -butyl-, -t-butyl-, 2-Ethylhexylester, erhalten werden. Die Umsetzung des Diamins mit dem Acrylsäureester erfolgt bei 60 - 80 °C im Molverhältnis 1:1. Eine weitere vorteilhafte Variante des erfindungsgemäßen Verfahrens besteht darin, hydrierte cyanethylierte Monoamine, wie z. B. N-Methyl-1.3-propandiamin, einzusetzen. Eine besonders vorteilhafte Variante des erfindungsgemäßen Verfahrens besteht darin, das Hydrierungsprodukt des Acetonins (4-iso-Propylamino-2-amino-2-methylpentan) als Reaktionskomponente für das IPDI-Uretdion einzusetzen. Die für das erfindungsgemäße Verfahren geeigneten Aminoalkohole sind im Prinzip alle Verbindungen, die eine primäre Aminogruppe sowie eine primäre oder sekundäre OH-Gruppe enthalten, wie z. B. Ethanolamin, 2-Amino-1-butanol, 2-Amino-2-methyl-1-propanol, Monoisopropanolamin, 2.2'-Aminoethoxy-ethanol, 3-Aminopropanol und 3-Aminomethyl-3.5.5-trimethylcyclohexanol. Manchmal hat es sich als zweckmäßig erwiesen, die freien NCO-Gruppen der UR-DA so zu blockieren, daß sie beim Einbrennvorgang nicht mehr freigesetzt werden. Bei den Blockierungsmitteln handelt es sich um Monoalkohole, wie z. B. Methanol, Ethanol, Butanol, 2-Ethylhexanol oder primäre wie sekundäre Monoamine, wie z. B. Butylamin, 2-Ethylhexylamin, Dibutylamin, Di-2-ethylhexylamin sowie Methylcyclohexylamin.

Die erfindungsgemäßen uretdiongruppenhaltigen Polyadditionsverbindungen werden nach dem nunmehr erläuterten Verfahren hergestellt. Die Herstellung erfolgt in zwei aufeinander folgenden Stufen, wobei
1. in der 1. Stufe IPDI-Uretdion mit dem eine primäre wie sekundäre Aminogruppe enthaltenden Diamin und/oder dem Aminoalkohol umgesetzt wird und
2. in der 2. Stufe dann gegebenenfalls die Umsetzung der noch freien NCO-Gruppen mit dem Blockierungsmittel erfolgt.

Die Umsetzung der 1. und 2. Stufe erfolgt in Lösung, wobei das Lösemittel aus der Gruppe aromatischer Kohlenwasserstoffe, Ester oder Ketone, wie z. B. Toluol, Ethyl-oder Butylacetat, Aceton, Methylethylketon, Methylisobutylketon, sowie beliebige Gemische dieser Lösemittel ausgewählt wird. Bevorzugtes Lösemittel ist Aceton. Die Herstellung der erfindungsgemäßen Verbindungen erfolgt so, daß zu der acetonischen Losung des IPDI-Uretdions bei Raumtemperatur das Diamin so zudosiert wird, daß die Temperatur der Reaktionslösung nicht über 40 °C steigt. Nach Beendigung der Diaminzugabe ist die Reaktion beendet. Danach wird entweder das Aceton abdestilliert, das ist der Fall, wenn das Reaktionsprodukt noch freie NCO-Gruppen enthalten soll.

Soll jedoch das Reaktionsprodukt keine freien NCO-Gruppen mehr enthalten, schließt sich die Umsetzung mit dem Blockierungsmittel B-H an. Für den Fall der Monoamine ist dies bei Raumtemperatur möglich, wobei nach der portionsweisen Zugabe des Monoamins die Reaktion beendet ist. Für den Fall, daß es sich bei den Blockierungsmitteln um Monoalkohole handelt, wird die Blockierung bei 60 °C und in Gegenwart von 0,01 Gew.-% Dibutylzinndilaurat (DBTL) durchgeführt.

Bei der Umsetzung des IPDI-Uretdions mit den Aminoalkoholen erfolgt die portionsweise Zudosierung des Aminoalkohols zu der acetonischen IPDI-Uretdion-Lösung bei 60 °C. Nach Beendigung der Aminoalkoholzugabe wird so lange bei 60 °C weitererhitzt, bis pro OH-Äquivalent ein NCO-Äquivalent umgesetzt ist. Die Blockierung mit Monoalkoholen und primären wie sekundären Monoaminen erfolgt wie bereits bei der entsprechenden Blockierung der IPDI-Uretdion/Diamin-Addukte. Wenn als Blockierungsmittel Monoalkohole eingesetzt werden, hat es sich als zweckmäßig erwiesen, IPDI-Uretdion bei ca. 70 °C mit dem Monoalkohol lösemittelfrei umzusetzen und nach erfolgter OH/NCO-Reaktion die Umsetzung mit dem Diamin bzw. Aminoalkohol in Lösung durchzuführen.

Ein weiterer Gegenstand der vorliegenden Erfindung ist die Verwendung der erfindungsgemäßen Verbindungen zur Herstellung von PUR-Pulvern mit mattem Aussehen. Die erfindungsgemäßen Polyurethan-Pulverlacksysteme bestehen aus den erfindungsgemäßen uretdiongruppenhaltigen Polyadditionsverbindungen in Kombination mit hydroxylgruppenhaltigen Polymeren.

Als Polyolkomponente zur Herstellung der erfindungsgemäßen matten PUR-Pulverlacke kommen grundsätzlich alle OH-Gruppen enthaltenden Polymere in Frage, wie z. B. Epoxidharze, Hydroxyacrylate; bevorzugt werden jedoch hydroxylgruppenhaltige Polyester mit einer OH-Funktionalität von 3 - 6, einem mittleren Molgewicht von 1800 - 5000, bevorzugt 2300 - 4500, einer OH-Zahl von 25 - 140 mg KOH/g, bevorzugt 30 - 90 mg KOH/g, und einem Schmelzpunkt von ≥ 70 bis ≤ 130 °C, bevorzugt ≥ 75 bis ≤ 110 °C. Derartige OH-haltige Polyester, wie sie in bekannter Weise durch Kondensation von Polyolen und Polycarbonsäuren hergestellt werden, sind z. B. in den DE-OSS 27 35 497 und 30 04 903 beschrieben.

Zur Herstellung der gebrauchsfertigen Pulverlacke werden das OH-haltige Harz und die erfindungsgemäßen uretdiongruppenhaltigen Addukte, gegebenenfalls mit Pigmenten, wie z. B. TiO₂, Verlaufsmittel, wie z. B. Polybutylacrylat, auf Extrudern oder Knetern bei Temperaturen zwischen 90 - 120 °C so gemischt, daß auf eine OH-Gruppe des hydroxylgruppenhaltigen Harzes 0,6 bis 1,2, vorzugsweise 0,8 - 1,1, blockierte NCO-Gruppen zu stehen kommen.

Die so hergestellten Pulverlacke können nach den üblichen Pulverauftragsverfahren, wie z. B. elektrostatisches Pulverversprühen oder Wirbelsintern, auf die zu überziehenden Formteile aufgebracht werden. Die Härtung der Überzüge erfolgt durch Erhitzen auf Temperaturen von 170 - 200 °C. Man erhält flexible Überzüge mit hervorragenden Korrosionsschutzeigenschaften und einer ausgezeichneten Thermostabilität. Im Vergleich zu den bis jetzt bekannten PUR-Pulvern auf Basis blockierter Polyisocyanate zeichnen sich die erfindungsgemäßen PUR-Pulver durch mattes Aussehen aus, wobei der Mattgrad in einem weiten Bereich variiert.

Nachfolgend wird der Gegenstand der Erfindung anhand von Beispielen erläutert.

### Experimenteller Teil

### A) Ausgangsverbindungen für die Härterkomponente

### I. NCO-Komponente

Als NCO-Komponente wurde ein IPDI-Uretdion mit einem NCO-Gehalt von 17,6 % und einem IPDI-Gehalt von 1 % eingesetzt. Der NCO-Gehalt des IPDI-Uretdions betrug nach dem Erhitzen auf 180 °C (1 h) 37,5 %.

### II. Kettenverlängerungsmittel (Diamine, Aminoalkohole)

1. 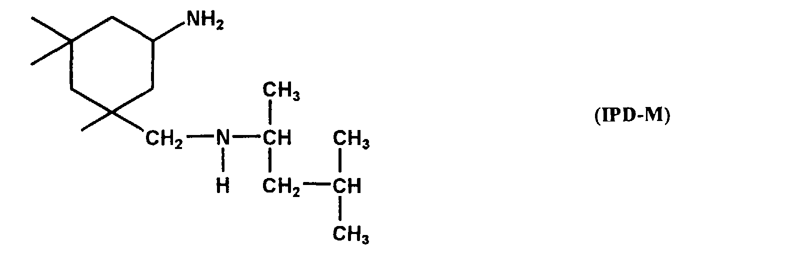
2. 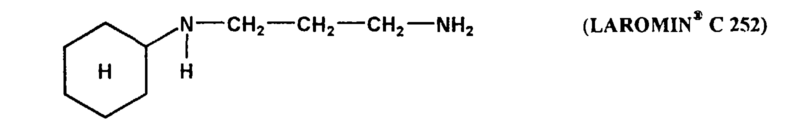
3. 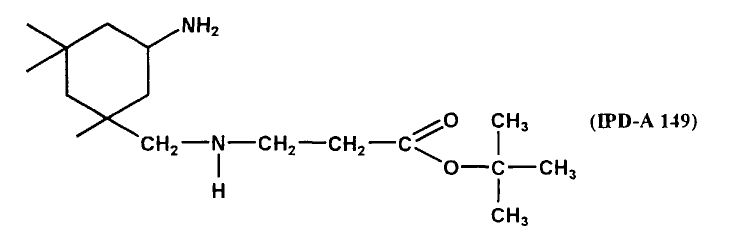
   Dieses IPD-A 149 wurde durch eine äquimolare Umsetzung von IPD und Acrylsäure-t-butylester hergestellt und stellt somit ein Gemisch aus ca. 70 Mol-% Monoaddukt, ca. je 15 Mol-% Diaddukt und freies IPD dar.
4. 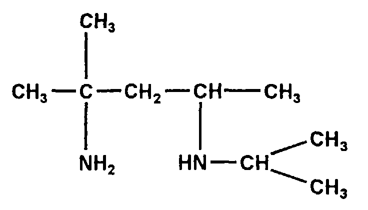
5. HO―CH₂―CH₂―NH₂
6.

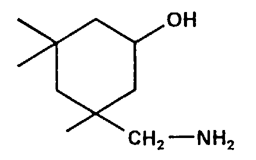

### III. Blockierungsmittel

Die freien NCO-Gruppen der erfindungsgemäßen Verbindungen wurden gegebenenfalls mit 2-Ethylhexanol oder Dibutylamin umgesetzt.

### B) Allgemeine Herstellungsvorschrift der erfindungsgemäßen Verbindungen

Zu der acetonischen Lösung des IPDI-Uretdions wird das Diamin bei Raumtemperatur so zudosiert, daß die Temperatur der Reaktionslösung nicht über 40 °C steigt. Nach Beendigung der Diaminzugabe ist die Reaktion beendet. Danach wird entweder das Aceton abdestilliert, das ist der Fall, wenn das Reaktionsprodukt noch freie NCO-Gruppen enthalten soll. Soll jedoch das Reaktionsprodukt keine freien NCO-Gruppen mehr enthalten, schließt sich die Umsetzung mit 2-Ethylhexanol oder Dibutylamin an. Für den Fall des Dibutylamins ist dies bei Raumtemperatur möglich, wobei nach der portionsweisen Zugabe des Dibutylamins die Reaktion beendet ist. Für den Fall, daß es sich um 2-Ethylhexanol handelt, wird die Umsetzung bei 60 °C und in Gegenwart von 0,01 Gew.-% Dibutylzinndilaurat durchgeführt.

Bei der Umsetzung des IPDI-Uretdions mit den Aminoalkoholen erfolgt die portionsweise Zudosierung des Aminoalkohols zu der acetonischen IPDI-Uretdion-Lösung bei 60 °C. Nach Beendigung der Aminoalkoholzugabe wird so lange bei 60 °C weitererhitzt, bis pro OH-Äquivalent ein NCO-Äquivalent umgesetzt ist. Die Blockierung mit Dibutylamin bzw. 2-Ethylhexanol erfolgt wie bereits bei der entsprechenden Blockierung der IPDI-Uretdion/Diamin-Addukte.

Die in der nachfolgenden Tabelle 1 aufgeführten Verbindungen wurden entsprechend der allgemeinen Herstellungsvorschrift hergestellt.

### C) Polyolkomponente

Als OH-Komponente zur Herstellung der erfindungsgemäßen PUR-Pulver wurde der Polyester ALFTALAT® AN 739 (Hoechst, Italien) mit einer OH-Zahl von 55 - 60 mg KOH/g, einer Säurezahl von 2 - 4 mg KOH/g, einem Schmelzpunkt von 82 - 90 °C und einer Viskosität bei 160 °C von 24-29 000 mPa·s eingesetzt.

### D) Herstellung der erfindungsgemäßen Pulverlacke

### Allgemeine Herstellungsvorschrift

Die gemahlenen Produkte - IPDI-Uretdion/Diamin-Addukt, Polyester, Verlaufsmittel, Weißpigment - werden in einem Kollergang innig vermischt und anschließend im Extruder bei 80 - 110 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei 200 °C zwischen 15 und 30 Minuten eingebrannt.

Der Härter wurde mit dem Polyol im Verhältnis NCO:OH = 1:1 gemischt Zusatzstoffe waren:
- 40,0 Gew.-%: KRONOS 2160
- 1,0 ": RESIFLOW PV 5
- 0,5 ": Benzoin

Die Abkürzungen in der folgenden Tabelle bedeuten:
- SD: = Schichtdicke in µm
- ET: = Tiefüng nach Erichsen in mm (DIN 53 156)
- GG 60 °∢: = Messung des Glanzes nach Gardner (ASTM-D 523)
- Imp. rev.: = Impact reverse in g·m

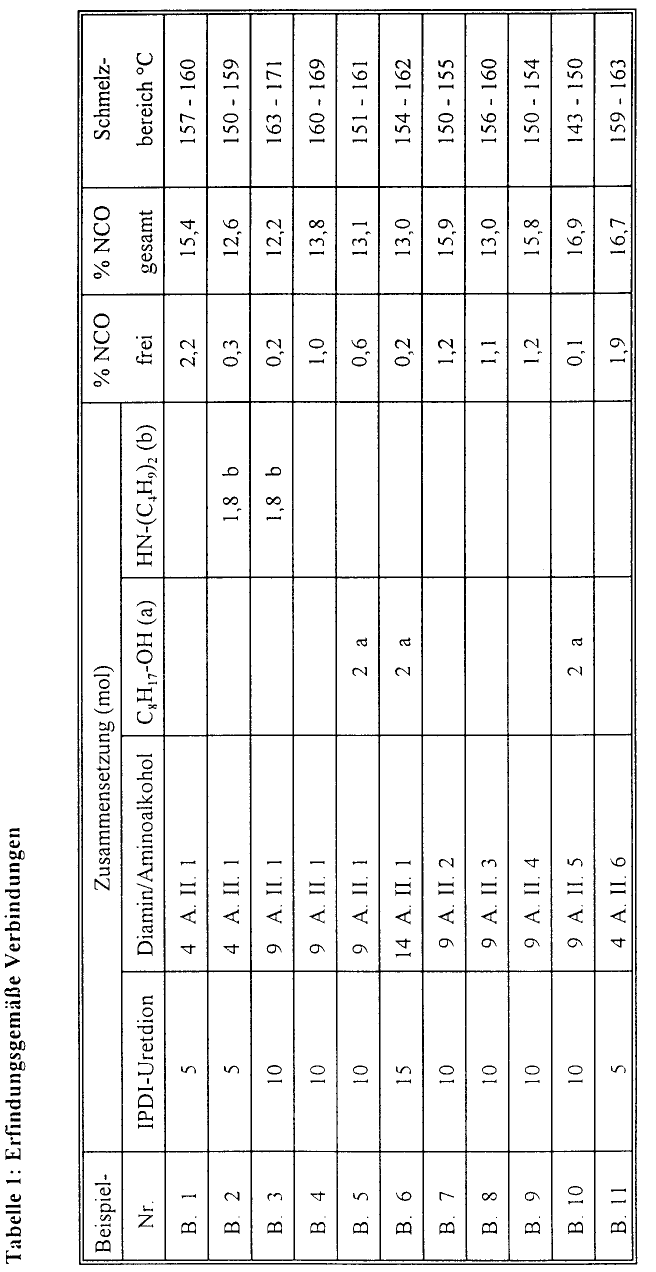

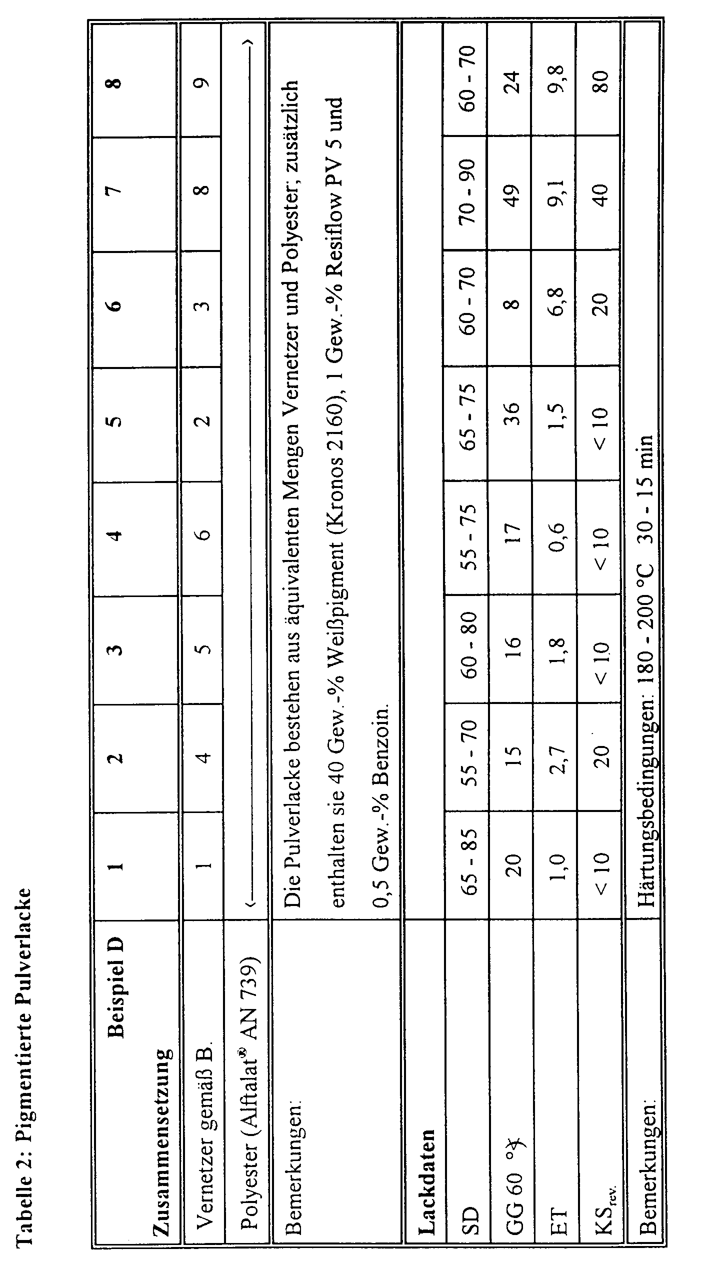

## Patentansprüche

1. Uretdiongruppenhaltige Polyadditionsverbindungen folgender Zusammensetzung: 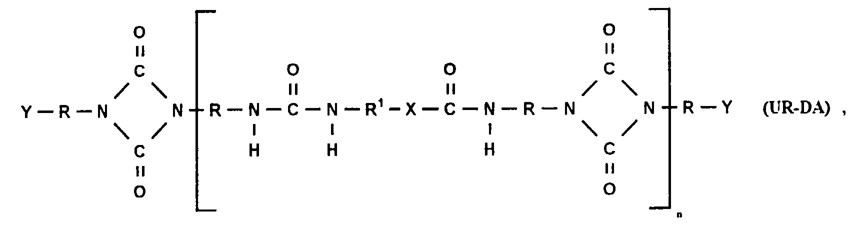 wobei:
Y: 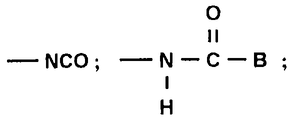
B: 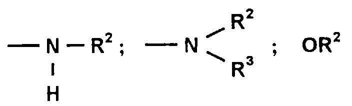
X: O ; NH, NR⁴
R: 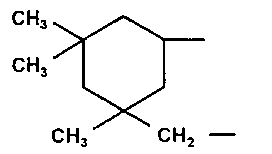
n: 1 - 20
R¹: R oder lineare, verzweigte oder cyclische Alkylenreste mit 2 - 16 C-Atomen
R², R³: gleiche oder verschiedene Kohlenwasserstoffreste mit 1 - 14 C-Atomen
R⁴: R² oder eine

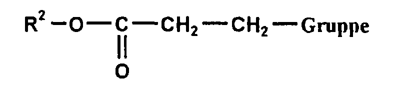

2. Verfahren zur Herstellung der Verbindungen gemäß Anspruch 1,
dadurch gekennzeichnet,
daß Isophorondiisocyanat-Uretdion in inerten Lösemitteln mit Diaminen, Aminoalkoholen oder Acrylsäureestergruppen enthaltenden Diaminen entsprechend folgender Reaktionsgleichung umgesetzt werden:

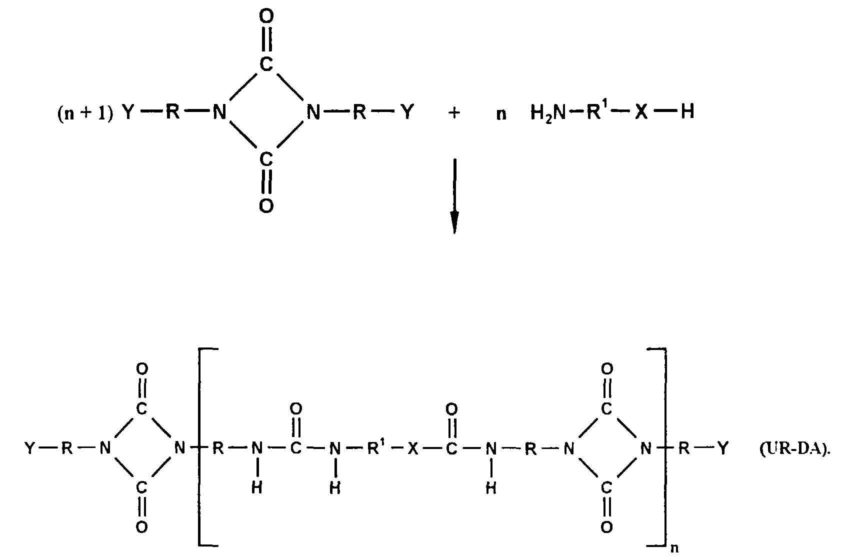

3. Verfahren nach Anspruch 2,
dadurch gekennzeichnet,
daß die Reaktionsprodukte (UR-DA) in einem zweiten Schritt blockiert werden.

4. Verwendung der erfindungsgemäßen Verbindungen zur Herstellung von matten PUR-Pulverbeschichtungen.
